# FASCICULE DE BREVET EUROPEEN

(11) **EP 2 751 820 B1**
(45) Date de publication et mention de la délivrance du brevet: **21.03.2018**
(21) Numéro de dépôt: 12750789.5
(22) Date de dépôt: 29.08.2012
(51) Int. Cl.: H01G 9/06, H01G 2/04, H01G 11/82, H01G 9/145, H01G 11/08, H01G 11/58, H01G 11/84, B23K 20/12

(54) **CONNECTEUR DISPOSÉ ENTRE DEUX ENSEMBLES DE STOCKAGE D'ÉNERGIE CYLINDRIQUES**
VERBINDER ZWISCHEN ZWEI ZYLINDRISCHEN ENERGIESPEICHERZELLEN
CONNECTOR BETWEEN TWO CYLINDRICALS ENERGY STORAGE CELLS

(30) Priorité: 29.08.2011 FR 1157604
(43) Date de publication de la demande: 09.07.2014
(73) Titulaire: Blue Solutions, 29500 Ergué Gabéric (FR)
(72) Inventeur: VIGNERAS, Erwan, F-29000 Quimper (FR)
(74) Mandataire: Regimbeau
(86) Numéro de dépôt international: PCT/EP2012/066731
(87) Numéro de publication internationale: WO 2013/030211

(56) Documents cités:
- EP-A1- 2 110 824
- WO-A1-2007/064089
- JP-A- 2000 149 907
- JP-A- 2003 133 175
- JP-A- 2004 171 856
- US-A1- 2005 054 240
- US-A1- 2009 104 516
- US-A1- 2009 123 830

## Description

La présente invention concerne le domaine technique général des ensembles de stockage d'énergie électrique.

Plus particulièrement l'invention concerne le domaine des modules comprenant au moins deux ensembles de stockage d'énergie électrique.

On entend, dans le cadre de la présente invention, par « ensemble de stockage d'énergie électrique », soit un condensateur (i.e. un système passif comprenant deux électrodes et un isolant), soit un supercondensateur (i.e. un système comprenant au moins deux électrodes, un électrolyte et au moins un séparateur), soit une batterie de type batterie au lithium (i.e. un système comprenant au moins une anode, au moins une cathode et une solution d'électrolyte entre l'anode et la cathode).

### PRESENTATION GENERALE DE L'ART ANTERIEUR

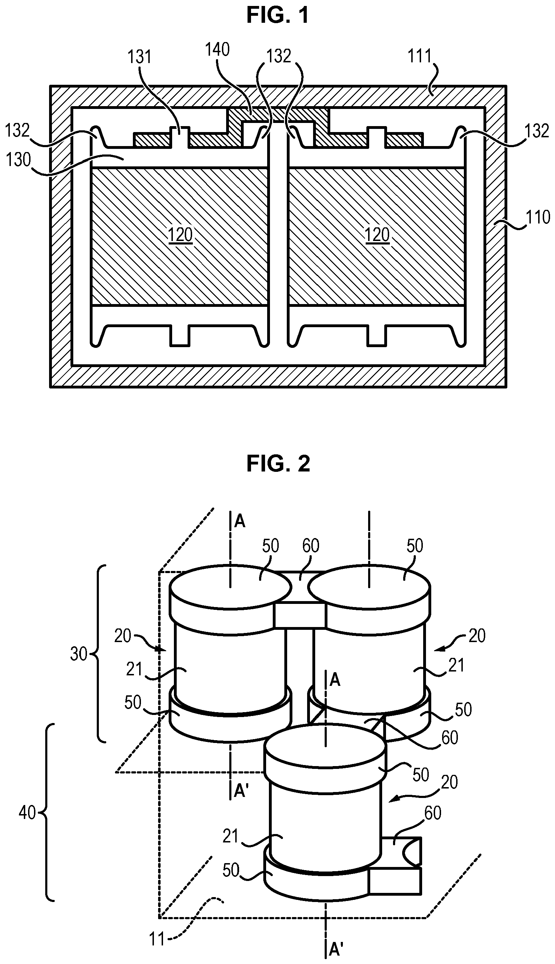

On connaît des modules tels que représentés à la figure 1, comprenant un boîtier 110 dans lequel sont disposés plusieurs ensembles de stockage d'énergie électrique 120.

Chaque ensemble de stockage est par exemple du type supercondensateur tubulaire.

Il comprend une enveloppe telle qu'un élément tubulaire, un enroulement capacitif et un électrolyte liquide à l'intérieur de l'enveloppe. L'ensemble de stockage comprend également deux couvercles pour fermer les deux extrémités de l'enveloppe. Chaque couvercle 130 est connecté électriquement à l'enroulement capacitif.

A l'intérieur du module, les ensembles de stockage 120 sont reliés deux à deux alternativement au niveau de leurs extrémités supérieures et inférieures en utilisant des barrettes de liaison 140.

Chaque couvercle 130 comprend une borne de connexion 131 apte à venir en contact avec un alésage traversant de la barrette de liaison 140.

La connexion des couvercles 130 avec la barrette de liaison 140 de deux ensembles de stockage 120 adjacents est réalisée par emmanchement en force de la barrette 140 sur les bornes de connexion 131 des couvercles 130, par soudure laser, ou autre, bord à bord entre la barrette 140 et les bornes 131, par vissage ou à l'aide de ces différentes techniques en combinaison.

Toutefois, ces techniques de connexion entre barrette et couvercle (i.e. emmanchement en force ou soudure ou vissage) nécessitent d'une part des tolérances serrées des bornes et barrettes, d'autre part un alignement précis des pièces entre elles pour assurer en finale la réalisation d'un module de qualité, d'où un coût de réalisation important.

On connaît également des modules dans lesquels les ensembles de stockage sont reliés deux à deux en utilisant une pièce longitudinale monobloc - dite bi-couvercle - formant à la fois couvercle et barrette de liaison. Une telle pièce longitudinale est notamment décrite dans le document FR 2 894 381.

L'utilisation d'un bi-couvercle pour connecter électriquement deux ensembles de stockage adjacents permet d'accroître les performances électriques et thermiques des modules. Plus précisément :
- en ce qui concerne les performances électriques, l'utilisation d'un bi-couvercle monobloc (i.e. élément en une seule pièce ayant la fonction d'un couvercle et d'une barrette) permet de diminuer la résistance interne des moyens de connexion : en effet, dans le cas d'une connexion de deux ensembles de stockage utilisant une barrette de connexion, le courant électrique est contraint de passer dans des zones de soudure de dimensions limitées ;
- en ce qui concerne les performances thermiques, l'utilisation d'un bi-couvercle monobloc permet d'augmenter la surface de contact entre les ensembles de stockage d'énergie et les parois du module, ce qui favorise la diffusion thermique vers la partie supérieure 111 du boîtier 110.

Toutefois, il n'est pas possible d'utiliser uniquement des bi-couvercles pour connecter la totalité des ensembles de stockage d'un module entre eux. En effet, cela nécessiterait d'effectuer l'imprégnation des ensembles à la fin de l'assemblage du module, puisque le bi-couvercle, qui permet cet assemblage, sert également à effectuer l'étanchéité de chacun des ensembles. Cela rend le procédé très complexe. Il est donc nécessaire, en plus de l'utilisation des bi-couvercles, d'utiliser des barrettes de connexion et des couvercles standards pour connecter électriquement les ensembles de stockage entre eux. On utilise par exemple les bi-couvercles pour connecter électriquement les faces inférieures des différents ensembles de stockage et des couvercles et barrettes illustrés à la figure 1 pour connecter électriquement les faces supérieures de ces ensembles de stockage.

L'assemblage est donc complexe du fait de la nécessité d'utiliser trois types de pièces différentes (i.e. couvercle, barrette et bi-couvercles).

Cette solution ne permet pas en outre d'optimiser la compacité du module obtenu du fait de la présence des couvercles et barrettes illustrés à la figure 1 sur une face des ensembles de stockage.

Le document US 2005/054240 décrit un module d'accumulation comprenant une pluralité d'ensembles d'accumulation, chaque ensemble d'accumulation incluant un corps principale cylindrique, un fond annulaire étagée à l'une de ses extrémités et un couvercle à son autre extrémité. Les ensembles sont reliés les uns aux autres au niveau de leurs fonds en utilisant un connecteur disposé sur lesdits fonds.

Le document JP 2000 14907 décrit un empilement de batteries cylindriques connectées les unes aux autres en utilisant des électrodes de soudage.

Le document US 2009/0104516 décrit un ensemble de batteries cylindriques, chaque batterie comprenant une face latérale et deux faces supérieure et inférieure opposées. Les batteries sont connectées deux à deux par l'intermédiaire d'une plaque de connexion de batterie positionnée sur la face supérieure (respectivement inférieure) de deux batteries adjacentes.

Le document JP 2003 133 175 décrit une barre de liaison comprenant des ouvertures pour l'insertion de batteries destinées à être connectées les unes aux autres.

Le document JP 2004 4171856 décrit un ensemble de cellules électriques connectées ensemble en utilisant une plaque de connexion plate.

Les documents EP 2 110 824, US 2009/0123830, WO 2007/064089 décrivent différentes configurations d'ensembles de stockage d'énergie.

Un but de la présente invention est de proposer une solution aux problèmes d'assemblage de modules cités ci-dessus, à savoir une solution technique permettant un assemblage de modules plus compacts, cet assemblage étant plus simple à mettre en oeuvre que les solutions de l'art antérieur.

### PRESENTATION DE L'INVENTION

A cet effet on prévoit un module comprenant au moins deux ensembles de stockage d'énergie électrique, chaque ensemble de stockage comprenant :
- un élément tubulaire comportant une face dite latérale,
- au moins un couvercle destiné à coiffer l'une des extrémités de l'élément tubulaire, le couvercle comprenant une paroi couvrante destinée à recouvrir ladite extrémité de l'élément tubulaire,
remarquable en ce que le module comprend en outre un organe de liaison destiné à connecter électriquement les deux ensembles, l'organe de liaison comprenant une ou plusieurs portions, chaque portion étant distincte d'au moins un des ensembles de stockage, l'organe de liaison s'étendant entre les deux ensembles de stockage de sorte que la hauteur de chaque ensemble de stockage connecté à l'organe de liaison est égale à la hauteur d'un ensemble de stockage dépourvu d'organe de liaison (i.e. non connecté à l'organe de liaison).

On entend, dans le cadre de la présente invention, par « distinct d'au moins un couvercle », le fait que chaque portion de l'organe de liaison n'est pas d'un seul tenant (i.e. d'une seule pièce) avec les deux couvercles à la fois.

On entend, dans le cadre de la présente invention par « coiffer », le fait d'obturer/fermer l'extrémité de l'élément tubulaire par exemple en :
- recouvrant l'extrémité de l'élément tubulaire avec un couvercle comprenant une jupe annulaire périphérique, le couvercle ayant un diamètre supérieur au diamètre de l'élément tubulaire,
- enfonçant dans l'élément tubulaire, au niveau de son extrémité, un couvercle ayant un diamètre inférieur au diamètre de l'élément tubulaire, les axes de révolution du couvercle et de l'élément tubulaire étant coaxiaux.

La hauteur de l'ensemble de stockage correspond à la dimension de cet ensemble selon l'axe de l'élément tubulaire.

De préférence, on nomme direction principale la direction reliant les deux ensembles de stockage une fois assemblés, et l'organe de liaison s'étend entre les ensembles de stockage de sorte que la dimension, selon une direction secondaire, perpendiculaire à la fois à la direction de l'axe et à la direction principale, de chaque ensemble de stockage connecté à l'organe de liaison est égale à la dimension selon cette direction d'un ensemble de stockage dépourvu d'organe de liaison (i.e. non connecté à l'organe de liaison).

Autrement dit, la dimension selon la direction secondaire de l'assemblage des deux ensembles de stockage munis de l'organe de liaison est égale à la dimension selon cette direction de l'ensemble de stockage ayant la plus grande dimension. Dans le cas idéal dans lequel il n'y a pas de dispersion entre les dimensions des ensembles, la dimension de l'assemblage selon cette direction est égale à la dimension d'un ensemble.

De cette façon, on minimise l'encombrement de l'assemblage également selon cette direction et on peut maximiser la capacité volumique du module de stockage d'énergie.

Dans un mode de réalisation particulier, la hauteur de l'assemblage des deux ensembles de stockage munis de l'organe de liaison est égale à la hauteur de celui des ensembles de stockage de plus grande hauteur. Dans le cas idéal dans lequel il n'y a pas de dispersion entre les dimensions des ensembles, la hauteur de l'assemblage est égale à la dimension d'un ensemble. Ce mode de réalisation correspond à la configuration dans laquelle l'organe de liaison relie deux extrémités identiques (supérieure ou inférieure) des ensembles et que les deux ensembles assemblés sont donc placés sur un même étage du module.

Dans un autre mode de réalisation, l'organe de liaison peut également relier une extrémité supérieure d'un ensemble avec l'extrémité inférieure d'un autre ensemble. Dans ce cas, la hauteur de l'assemblage est inférieure à la somme des hauteurs des ensembles. Ce mode de réalisation correspond à la configuration dans laquelle les deux ensembles assemblés ne sont pas placés sur un même étage du module.

D'autres aspects préférés mais non limitatifs du module selon l'invention sont les suivants :
- l'organe de liaison est destiné à être en contact avec :
   ∘ le couvercle d'au moins l'un des ensembles de stockage et/ou
   ∘ l'élément tubulaire d'au moins l'un des ensembles de stockage pour connecter électriquement l'organe de liaison et les ensembles de stockage ;
- l'organe de liaison comprend au moins une face de contact destinée à venir en contact avec le couvercle ou avec l'élément tubulaire d'au moins l'un des ensembles de stockage, la face de contact présentant une forme complémentaire de la forme du couvercle ou de l'élément tubulaire ;
- la face de contact est par exemple concave. Elle est alors de forme complémentaire de celle d'un ensemble cylindrique. La face de contact peut toutefois être de toute autre forme ;
- l'organe de liaison comprend un berceau destiné à être fixé, par exemple par emboîtement, sur un support d'un des ensembles de stockage, le berceau et le support ayant des formes complémentaires ;
- le berceau comporte un tenon ou une mortaise, et le support comporte une mortaise ou un tenon ;
- l'organe de liaison est distinct des deux ensembles de stockage, l'organe de liaison comportant deux faces de contact, chaque face de contact présentant de préférence un profil complémentaire du profil du couvercle et/ou de l'élément tubulaire avec lequel ladite face est destinée à venir en contact ;
- l'organe de liaison comprend une patte monobloc avec un des ensembles, notamment un couvercle, ce qui permet de faciliter le procédé d'assemblage ;
- la hauteur de la face de contact est égale à la hauteur d'un couvercle, pour maximiser la surface de contact entre l'organe de liaison et ledit couvercle. Mais la face de contact peut également être moins haute que le couvercle;
- l'organe de liaison comprend deux pattes formant chacune une portion de l'organe de liaison, chaque patte étant monobloc avec un ensemble, notamment couvercle, respectif, lesdites pattes étant positionnées sur les ensembles de sorte à se superposer lors de la connexion électrique desdits ensembles. Ce mode de réalisation permet de faciliter le procédé d'assemblage puisqu'il ne nécessite la mise en oeuvre que d'une seule étape de liaison (entre les deux portions de l'organe de liaison) tout en rendant la liaison plus simple puisque la configuration de la surface de liaison n'est pas imposée par la forme ou la position du couvercle ou de l'élément tubulaire,
- on notera que les pattes des deux ensembles peuvent ne pas avoir la même épaisseur. L'une des pattes formant l'organe de liaison - par exemple la patte la plus éloignée des parois couvrantes des couvercles - peut être plus épaisse que l'autre des pattes formant l'organe de liaison, ce qui peut faciliter la liaison entre les deux pattes quel que soit le type de liaison choisi, notamment lorsque cette liaison est une liaison par soudage, par exemple par soudage par friction malaxage ;
- dans le cas où l'un des couvercles comprend une patte de liaison, l'élément tubulaire correspondant peut présenter une découpe de forme complémentaire de la section de la patte, ce qui permet de laisser la patte saillir de l'ensemble et venir en contact avec l'autre ensemble, et ce même lorsqu'il est prévu que le couvercle soit enfoncé à l'intérieur de l'élément tubulaire,
- le couvercle d'au moins un ensemble peut également comprendre une jupe périphérique s'étendant à la périphérie de la paroi couvrante du couvercle et étant destinée à entourer la face latérale de l'élément tubulaire, dans ce cas une patte de l'organe de liaison peut être agencée sur la jupe, et par exemple s'étendre vers l'extérieur, perpendiculairement à la jupe périphérique. On notera que ce mode de réalisation et le précédent peuvent être combinés, la configuration des différents couvercles du module n'étant pas forcément identiques,
- chaque portion de l'organe de liaison est reliée à l'ensemble ou aux ensembles dont elle est distincte par soudage, de préférence par soudage par friction malaxage. Ce type de soudure est facile à reconnaître sur la pièce finie puisque la trace de l'outil en rotation à l'interface des deux pièces est visible (la matière s'étant solidifiée de cette façon).

L'invention concerne également un procédé d'assemblage d'un module comportant au moins deux ensembles de stockage d'énergie électrique, chaque ensemble de stockage comprenant :
- un élément tubulaire comportant une face dite latérale,
- au moins un couvercle destiné à coiffer l'une des extrémités de l'élément tubulaire, le couvercle comprenant une paroi couvrante destinée à recouvrir ladite extrémité de l'élément tubulaire,
le procédé étant remarquable en ce qu'il comprend une étape de positionnement et de mise en contact d'au moins une portion d'un organe de liaison, ledit organe comprenant au moins une portion, chaque portion étant distincte d'au moins un ensemble, de façon à relier les deux ensembles de stockage pour les connecter électriquement, l'organe de liaison étant positionné entre les deux ensembles de stockage de sorte que la hauteur de l'ensemble de stockage connecté à l'organe de liaison est égale à la hauteur d'un ensemble de stockage dépourvu d'organe de liaison.

Des aspects préférés mais non limitatifs du procédé d'assemblage selon l'invention sont les suivants :
- le procédé comprend en outre une étape de fixation de chaque portion de l'organe de liaison de façon à le relier au ou aux ensembles de stockage dont elle est distincte ;
- l'étape de fixation est une étape de soudage, notamment de soudage par friction malaxage.

### PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :
- la figure 1 illustre un mode de réalisation d'un module de l'art antérieur,
- la figure 2 illustre un exemple de module selon l'invention,
- les figures 3 à 5 illustrent différents exemples de positionnement d'un organe de liaison selon l'invention,
- les figures 6 à 9 illustrent différents modes de réalisation de l'organe de liaison selon l'invention,

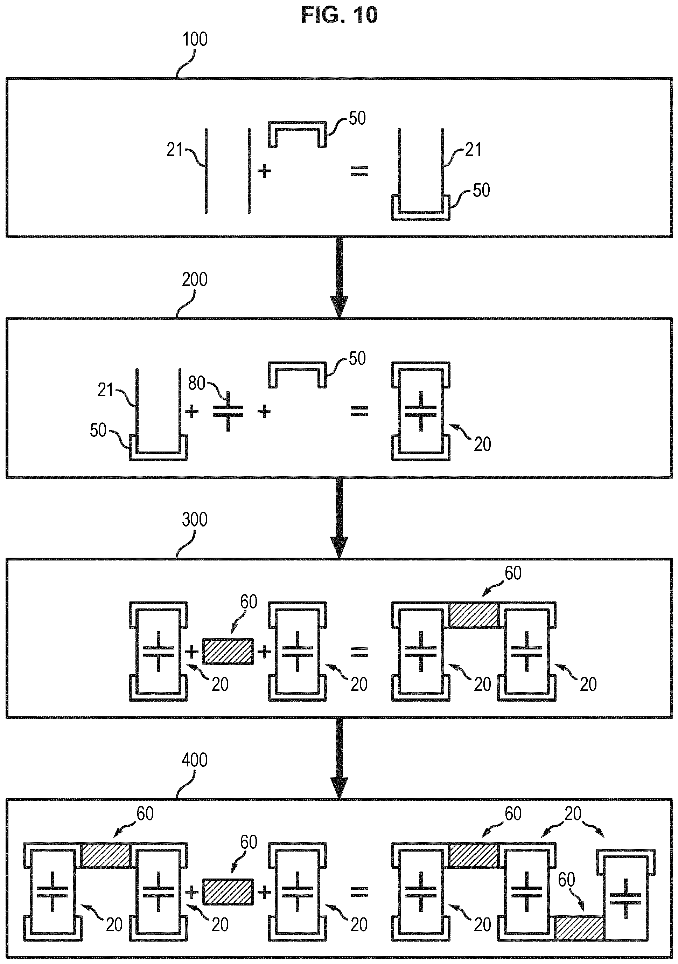

- la figure 10 illustre un exemple de procédé d'assemblage de modules selon l'invention.

### DESCRIPTION DE L'INVENTION

On va maintenant décrire différents modes de réalisation du module selon l'invention en référence aux figures. Dans ces différentes figures, les éléments équivalents du module portent les mêmes références numériques.

Comme illustré à la figure 2, le module 1 comprend un boîtier 10 dans lequel sont disposés au moins deux ensembles de stockage d'énergie électrique 20. Plus précisément, le module comprend trois ensembles de stockages disposés sur plusieurs étages.

Les ensembles de stockage 20 sont de forme globalement cylindrique. Dans d'autres variantes non représentées ici, les ensembles de stockage peuvent être de forme parallélépipédique, cubique, ovale, hexagonale, sans que cela change les principes généraux de l'invention.

Un premier étage 30 du module comprend deux ensembles de stockage 20 disposés côte à côte dans le boîtier 10. Un deuxième étage 40 du module comprend un troisième ensemble de stockage d'énergie 20.

Les axes de révolution A-A' des ensembles de stockage 20 sont parallèles. Dans le mode de réalisation illustré à la figure 2, les ensembles de stockage 20 sont disposés de sorte que leurs axes de révolution A-A' sont perpendiculaires à la paroi inférieure 11 du boîtier 10.

Chaque ensemble de stockage 20 comprend un élément tubulaire 21, et un élément capacitif (non représenté) dans l'élément tubulaire 21.

Le matériau constituant l'élément tubulaire 21 peut être isolant électriquement - par exemple un plastique - ou conducteur électriquement - par exemple un métal tel que de l'aluminium, de l'acier inoxydable, etc.

L'élément tubulaire 21 peut être ouvert à ses deux extrémités, ou comprendre un fond. Dans le mode de réalisation illustré à la figure 2, chaque élément tubulaire 21 comprend deux ouvertures sur ses faces supérieure et inférieure.

Chaque face ouverte de l'élément tubulaire 21 est coiffée par un couvercle 50 connecté électriquement à l'ensemble de stockage d'énergie 20 le long de génératrices de soudure. Le couvercle 50 est électriquement conducteur. Le matériau constituant le couvercle 50 est par exemple un métal tel que de l'aluminium, de l'acier inoxydable, etc.

Chaque couvercle 50 est composé :
∘ d'une paroi couvrante 51, 52 destinée à recouvrir la face supérieure 24 (respectivement la face inférieure 22) de son élément de stockage 20 associé, et
∘ d'une jupe périphérique 53, 54 destinée à entourer en partie la face latérale 23 de l'élément tubulaire 21.

Chaque couvercle 50 peut ou non comprendre un bord périphérique (tel que le bord périphérique 132 illustré sur la figure 1) s'étendant vers l'extérieur parallèlement à l'axe de révolution A-A' de l'ensemble de stockage sur sa face opposée à la jupe périphérique.

Le module comprend également trois organes de liaison 60 qui seront décrits plus en détail dans la suite.

Une particularité du module selon l'invention est que l'organe de liaison 60 et les couvercles 50 sont connectés par soudure au niveau de la jupe 53, 54 de chaque couvercle 50. La technique de soudage peut être par laser transparence ou laser bord à bord ou encore préférentiellement par friction malaxage (ou « FSW » acronyme de l'expression anglo-saxonne « Friction Stir Welding »).

On entend par soudage par laser transparence, le fait de souder deux pièces superposées, par un faisceau d'énergie traversant l'une des pièces à souder - soit au travers d'une partie amincie de celle-ci, si la pièce est épaisse, soit au travers de toute son épaisseur, si la pièce est mince.

On entend par soudage laser bord à bord, le fait de souder deux pièces positionnées bord à bord par un faisceau d'énergie non traversant, mais ajusté à la forme des bords à souder, et positionné avec précision à l'interface des bords à souder.

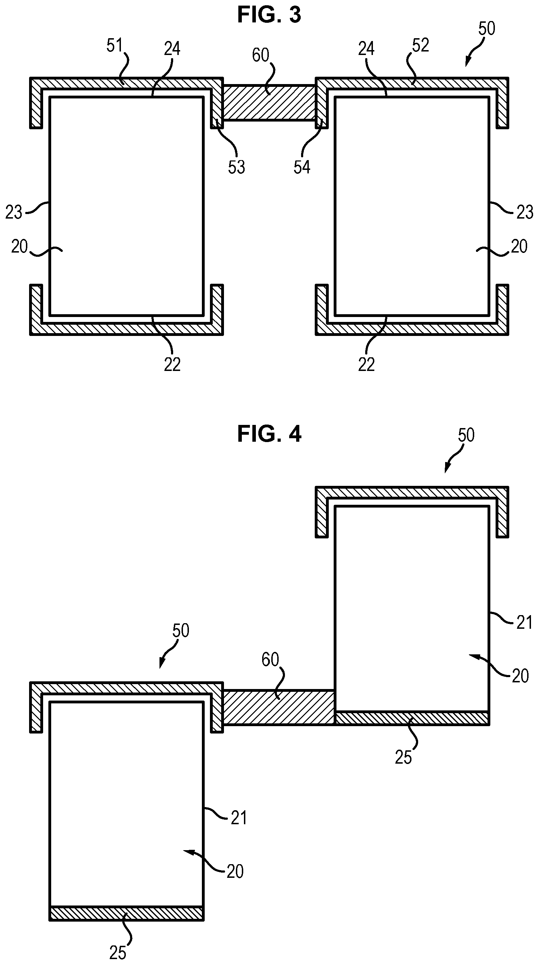

En référence aux figures 3 et 4, on a illustré différents exemples de connexion de deux ensembles de stockage 20 adjacents au moyen d'un organe de liaison 60. Dans ces modes de réalisation, l'organe de liaison 60 est avantageusement positionné entre les ensembles de stockage 20 de sorte que la hauteur de l'ensemble de stockage connecté à l'organe de liaison soit égale à la hauteur d'un ensemble de stockage non connecté à un organe de liaison.

L'organe de liaison 60 est électriquement conducteur. Le matériau constituant l'organe de liaison 60 est par exemple un métal tel que de l'aluminium, du cuivre, etc.

Dans le mode de réalisation illustré à la figure 3, l'organe de liaison 60 est en contact avec les couvercles supérieurs 50 des ensembles de stockage 20 à connecter électriquement. Plus précisément, l'organe de liaison 60 est en contact avec les couvercles 50 au niveau de leurs jupes 53, 54 respectives.

Ainsi, et contrairement aux modules de l'art antérieur, deux ensembles de stockage 20 adjacents ne sont pas connectés en utilisant une barrette de liaison 131 disposée SUR les couvercles 50, mais en utilisant un organe de liaison 60 disposé ENTRE les couvercles.

Plus précisément, l'organe de liaison 60 est en contact :
- avec les couvercles au niveau de leur jupe périphérique, et/ou
- avec les éléments tubulaires des ensembles de stockage au niveau de leur paroi latérale 23.

Ceci permet de minimiser la hauteur de deux ensembles de stockages adjacents connectés électriquement et donc de maximiser la compacité du module ainsi obtenu.

Lorsque l'organe permet de relier deux extrémités identiques (supérieure ou inférieure) du même ensemble, comme cela est le cas pour les deux ensembles de la figure 3, situés au même étage 30 du module, la hauteur de l'assemblage des deux ensembles est égale à la hauteur de chaque ensemble (dans le cas idéal où les ensembles ont les mêmes dimensions).

Dans le mode de réalisation illustré à la figure 4, l'élément tubulaire 21 de chaque ensemble de stockage 20 comprend un fond 25. Chaque ensemble de stockage 20 comprend un unique couvercle 50 destiné à coiffer la face supérieure ouverte de l'élément tubulaire 21. L'organe de liaison 60 est en contact avec le couvercle supérieur 50 d'un ensemble de stockage 20 d'une part, et avec la partie inférieure de l'élément tubulaire 21 d'un ensemble de stockage adjacent d'autre part.

Lorsque l'organe permet de relier une extrémité supérieure d'un ensemble et l'extrémité inférieure d'un autre ensemble, comme cela est le cas sur la figure 4, pour les ensembles appartenant à deux étages différents 30 ; 40 du module, la hauteur de l'assemblage est inférieure à la somme des hauteurs des ensembles.

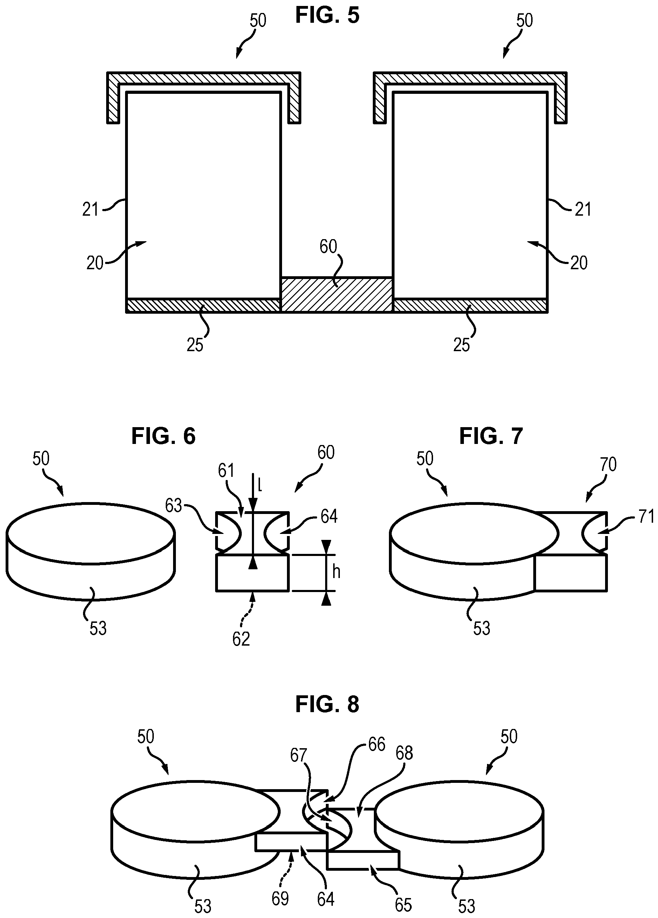

En variante, l'organe de liaison 60 peut être en contact avec les éléments tubulaires de deux ensembles de stockage adjacents, comme illustré à la figure 5.

On pourrait également envisager d'autres configurations, par exemple dans lesquelles l'organe relie une extrémité d'un ensemble avec une partie médiane d'un autre ensemble.

On notera que l'organe de liaison est configuré dans chacun des cas illustrés ici de sorte l'encombrement de l'assemblage des deux ensembles par le biais de cet organe soit minimal, autant en hauteur qu'en largeur (à savoir selon une direction perpendiculaire à l'axe des ensembles et à la direction reliant ces axes). En effet, l'organe est configuré de sorte que, selon cette direction, la dimension de l'assemblage soit égale à la dimension d'un ensemble, si l'on considère le cas idéal ou tous les ensembles possèdent les mêmes dimensions. Autrement dit, la dimension de l'organe de liaison ne dépasse pas le diamètre de l'ensemble.

En référence à la figure 6, on a illustré un mode de réalisation de l'organe de liaison selon l'invention.

L'organe de liaison 60 comprend des faces supérieure et inférieure 61, 62 planes. L'organe de liaison 60 peut être positionné de sorte que sa face supérieure 61 (respectivement inférieure 62) s'étende dans un même plan que la face supérieure (respectivement inférieure) d'un ensemble de stockage.

En fonction des configurations de connexion possible entre l'organe de liaison et l'ensemble de stockage, cette face supérieure (respectivement inférieure) de l'ensemble de stockage peut être :
- la face de la paroi couvrante 51, 52 opposée à la jupe 53, 54 d'un couvercle 50 ou
- la face externe du fond d'un élément tubulaire 21.

L'organe de liaison 60 comprend également deux faces (dénommées « faces de contact » dans la suite) latérales 63, 64 opposées destinées à venir en contact avec la jupe 53, 54 d'un couvercle 50 ou avec la face latérale 23 d'un élément tubulaire 21.

Dans le mode de réalisation illustré à la figure 6, chaque face de contact 63, 64 est concave et présente un profil sensiblement en arc de cercle selon une section parallèle à la face supérieure 61 de l'organe de liaison 60. Ainsi, la face de contact est de forme complémentaire de la jupe du couvercle ou de l'élément tubulaire sur lequel elle est destinée à être fixée et la surface de contact entre l'ensemble et l'organe de liaison est maximisée. Ceci permet d'augmenter la surface de contact entre l'organe de liaison 60 et les ensembles de stockage 20 et donc de réduire la résistance électrique du module.

Pour maximiser cette surface de contact entre l'organe de liaison 60 et les ensembles de stockage 20 tout en minimisant l'encombrement du module :
- la hauteur de chaque face de contact 63, 64 peut être choisie égale à la hauteur h de la jupe 53,54 d'un couvercle 50, et/ou
- la largeur l de l'organe de liaison 60 peut être choisie égale au diamètre de l'élément tubulaire 21 ou du couvercle 50 avec lequel ledit organe est destiné à venir en contact.

Le lecteur appréciera que la (ou les) face(s) de contact 63, 64 de l'organe de liaison 60 peut (peuvent) avoir d'autres profils qu'un profil en arc de cercle.

Par exemple, chaque face de contact 63, 64 de l'organe de liaison 60 peut avoir un profil en queue d'aronde, ou en dent de scie etc.

Par ailleurs, chaque face de contact 63, 64 de l'organe de liaison peut comprendre un berceau de forme mâle (respectivement femelle) destiné à être fixé sur un support de forme femelle (respectivement mâle) de l'ensemble de stockage.

Ceci permet de fixer mécaniquement l'organe de liaison sur l'ensemble de stockage, soit par emboîtement, soit par clipsage, soit par un autre type de fixation mécanique connue de l'homme du métier. Par exemple, le berceau de la face de contact peut comprendre un tenon (respectivement une mortaise) et le support de l'ensemble de stockage peut comprendre une mortaise (respectivement un tenon).

En référence à la figure 7, on a illustré un autre mode de réalisation de l'organe de liaison 60. Dans ce mode de réalisation, l'organe de liaison 60 et un couvercle 50 sont monoblocs, c'est-à-dire que le couvercle 50 et l'organe de liaison 60 sont réalisés en une seule pièce.

Le couvercle 50 comprend une jupe annulaire périphérique 53 et une patte radiale 70 sur la jupe annulaire périphérique 53. La patte radiale 70 comprend quatre faces sensiblement planes et une face de contact 71 opposée au couvercle 50.

La face contact 71 est destinée à venir en contact avec le couvercle 50 ou l'élément tubulaire 21 d'un ensemble de stockage 20 adjacent.

La face de contact 71 peut présenter une forme complémentaire du couvercle 50 ou de l'élément tubulaire 21 avec lequel elle est destinée à venir en contact, telle qu'une forme concave.

Tout comme pour l'organe de liaison 60 illustré à la figure 6, les dimensions de la patte radiale 70 peuvent être choisies pour maximiser la surface de contact entre la patte radiale 70 et l'ensemble de stockage 20 avec lequel ladite patte est destinée à venir en contact ; en particulier :
- la hauteur h de la face de contact 71 peut être égale à la hauteur d'une jupe 53, et/ou
- la largeur l de la face de contact 71 peut être égale au diamètre de l'élément tubulaire ou du couvercle avec lequel ladite patte est destinée à venir en contact.

En référence à la figure 8, on a illustré un troisième mode de réalisation de l'organe de liaison. Dans ce mode de réalisation, chaque couvercle 50 comprend une patte radiale 64, 65 s'étendant vers l'extérieur de la jupe annulaire périphérique 53, parallèlement à la face supérieure du couvercle. La patte radiale de chaque couvercle forme une portion de l'organe de liaison. Chacune des pattes 64, 65 comprend une face de contact 66, 67 concave opposée au couvercle 50. Cette face de contact 66, 67 est destinée à venir en contact avec le couvercle d'un ensemble de stockage adjacent. La hauteur de la patte radiale est inférieure ou égale à la moitié de la hauteur de la jupe.

Un premier type de couvercle comprend une patte radiale 64 affleurant (i.e. s'étendant dans le prolongement de) la paroi couvrante du couvercle 50.

Un deuxième type de couvercle comprend une patte radiale 65 s'étendant à l'extrémité libre de la jupe annulaire périphérique 53, parallèlement à la paroi couvrante 51, 52 du couvercle 50. Ainsi, les formes des deux types de couvercles sont complémentaires. Pour connecter électriquement deux ensembles de stockage adjacents, on utilise un couvercle du premier type sur l'un des deux ensembles de stockage, et un couvercle du deuxième sur l'autre ensemble de stockage. Ces couvercles sont positionnés de sorte que les pattes radiales des couvercles du premier et du deuxième type se superposent, la surface inférieure 69 de la patte supérieure 64 reposant sur la surface supérieure 68 de la patte inférieure 65.

Le fait de superposer les pattes radiales permet de faciliter l'opération de soudure. Avantageusement, les pattes radiales 64, 65 peuvent être soudées ensemble, au niveau des surfaces 68, 69.

On notera que l'épaisseur de la patte inférieure 65 est de préférence supérieure à celle de la patte supérieure 64. Elle peut en effet former dans ce cas un support permettant le soudage des pattes 64, 65, sans endommager l'organe de liaison.

Ceci permet de maximiser la surface d'échange entre les deux pattes radiales 64, 65 et ainsi de minimiser la résistance électrique de l'organe de liaison.

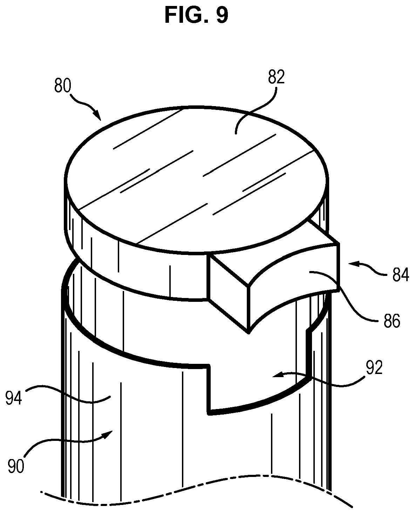

On a également représenté une autre variante de réalisation de l'invention à la figure 9. Sur cette figure, le couvercle 80 est de forme différente de tout ce qui a été décrit auparavant. En effet, le couvercle est formé d'un disque essentiellement plan 82 et ne comprend pas de jupe périphérique. Le disque 82 est de dimensions inférieures à celles de l'extrémité de l'élément tubulaire 90 et il est donc inséré dans l'élément tubulaire de sorte que la face supérieure du couvercle 80 affleure avec l'extrémité de l'élément tubulaire.

Le couvercle comprend également une patte radiale 84 de hauteur égale à celle du disque 82. La patte 84 comprend une face de contact 86 destinée à être reliée à un deuxième ensemble, comme cela a été décrit auparavant.

On remarque également que l'élément tubulaire 90 comprend une découpe 92 dans sa paroi latérale 94, permettant à la patte radiale de saillir de l'élément tubulaire 90 et de connecter l'ensemble à un deuxième ensemble adjacent.

On notera que la forme de couvercle décrite en référence à la figure 9 peut être adoptée même lorsque l'élément tubulaire ne comprend pas de découpe. Dans ce cas, le couvercle est posé sur l'extrémité de l'élément tubulaire.

En résumé et en référence aux figures 6 à 9, l'organe de liaison peut être réalisé en une (figures 6, 7 ou 9) ou deux parties (figure 8), l'une et/ou l'autre de ces parties pouvant être d'un seul tenant avec l'un des couvercles (figures 7 à 9).

Toutefois, quelque soit la configuration de l'organe de liaison, celui-ci n'est jamais d'un seul tenant avec deux couvercles à la fois. Ceci permet d'améliorer la flexibilité d'assemblage du module.

On va maintenant décrire plus en détail un exemple de procédé.

Dans le cas où l'élément tubulaire 21 ne comprend pas de fond, un couvercle 50 est disposé sur une des faces de l'élément tubulaire (étape 100).

Un élément capacitif 80 est positionné à l'intérieur de l'élément tubulaire 21. Un couvercle 50 est placé sur l'extrémité ouverte de l'élément tubulaire (étape 200) puis, une fois l'étanchéité de la liaison élément tubulaire 21- couvercle 50 assurée, l'électrolyte est introduite dans l'élément tubulaire.

On obtient ainsi un premier ensemble de stockage d'énergie électrique. Ces étapes sont répétées pour obtenir le nombre d'ensemble de stockage désirés pour le module.

Dans une étape du procédé d'assemblage, deux ensembles de stockage d'énergie sont positionnés côte à côte.

Un organe de liaison 60 est positionné entre les deux ensembles de stockage d'énergie. Cet organe de liaison 60 est mis en contact avec les jupes des deux ensembles de stockage d'énergie 20 pour les connecter électriquement. Avantageusement, l'organe de liaison est positionné de sorte que la hauteur de l'ensemble de stockage connecté à l'organe de liaison soit égale à la hauteur d'un ensemble de stockage non connecté à l'organe de liaison.

L'organe de liaison est fixé sur les deux ensembles de stockage. Cette fixation peut être obtenue par collage, par vissage, par soudage ou par emboîtement de pièces complémentaires prévues sur les couvercles et sur l'organe de liaison. Le soudage, notamment le soudage par friction malaxage, constitue le mode de réalisation préférentiel car il permet un meilleur passage du courant.

Ces différentes étapes peuvent être répéter (étape 400) pour connecter électriquement une pluralité d'ensembles de stockage afin de réaliser des modules présentant des propriétés différentes en fonction de l'application visée.

L'assemblage d'un module en utilisant l'organe de liaison décrit ci-dessus présente de nombreux avantages :
- les différentes configurations de l'organe de liaison permettent une bonne flexibilité de l'assemblage de deux ensembles de stockage adjacents, à différentes hauteurs et à différents angles, puisque l'organe de liaison n'est pas d'un seul tenant avec les couvercles des deux ensembles de stockage ;
- l'assemblage de deux ensembles de stockage peut être réalisé à partir de pièces standard (couvercle et organe de liaison) quelle que soit la configuration d'assemblage des ensembles de stockage adjacents (ensembles de stockages positionnés à des étages différents et/ou avec des angles différents etc.) ;
- les pièces utilisées pour l'assemblage (organe de liaison, couvercle, etc.) étant de forme simple et standard, les coûts de fabrication de ceux-ci (et par conséquent du module) sont faibles ;
- les organes de liaison permettent de maximiser la compacité du module ;
- l'utilisation d'organe de liaison permet également une meilleure évacuation thermique ; en effet, dans les modules de l'art antérieur où une barrette est superposée au couvercle, la chaleur ne s'évacue que par les cordons de soudure reliant la barrette au couvercle ; au contraire, avec l'utilisation d'organe de liaison, la chaleur s'évacue par toute la face supérieure du couvercle qui est directement en contact avec l'air ambiant ;
- enfin, l'utilisation d'un organe de liaison selon l'invention permet de diminuer la résistance du module, la distance parcourue par le courant électrique dans un module selon l'invention étant inférieure à la distance parcourue par le courant électrique dans un module dont les ensembles sont reliés avec une barrette de connexion superposée au couvercle.

Le lecteur aura compris que de nombreuses modifications peuvent être apportées au procédé et au dispositif décrits précédemment sans sortir matériellement des nouveaux enseignements et des avantages décrits ici.

Notamment, l'élément tubulaire, le couvercle ou l'organe de liaison peut présenter d'autres formes que celles illustrées dans les figures. Par exemple l'organe de liaison peut être une tige ou peut comprendre une face de contact de forme non complémentaire des formes de l'ensemble.

Par conséquent, toutes les modifications de ce type entrent dans la portée du module selon l'invention tel que défini dans les revendications jointes.

## Revendications

1. Module comprenant au moins deux ensembles de stockage d'énergie électrique (20), chaque ensemble de stockage comprenant :
- un élément tubulaire (21, 90) comportant une face dite latérale (23, 94),
- au moins un couvercle (50, 80) destiné à coiffer l'une des extrémités de l'élément tubulaire, le couvercle comprenant une paroi couvrante (51, 52, 82) destinée à recouvrir ladite extrémité de l'élément tubulaire,
**caractérisé en ce que** le module comprend en outre un organe de liaison (60, 84) destiné à connecter électriquement les deux ensembles, l'organe de liaison comprenant une ou plusieurs portions (64, 65), chaque portion étant distincte d'au moins un des ensembles de stockage (20), l'organe de liaison n'étant pas disposé sur ledit au moins un couvercle mais s'étendant entre les deux ensembles de stockage de sorte que la hauteur de chaque ensemble de stockage connecté à l'organe de liaison est égale à la hauteur d'un ensemble de stockage dépourvu d'organe de liaison.

2. Module selon la revendication précédente, dans lequel l'organe de liaison s'étend entre les deux ensembles de stockage de sorte que la hauteur des deux ensembles assemblés soit égale à la hauteur de l'ensemble ayant la plus grande hauteur.

3. Module selon l'une quelconque des revendications précédentes, dans lequel on définit comme direction principale la direction reliant les axes des deux éléments tubulaires une fois les ensembles assemblés, l'organe de liaison s'étendant entre les ensembles de stockage de sorte que la dimension, selon une direction secondaire, perpendiculaire à la fois à la direction des axes des éléments tubulaires et à la direction principale, de l'assemblage des deux ensembles de stockage munis de l'organe de liaison est égale à la dimension selon cette direction de l'ensemble de stockage ayant la plus grande dimension.

4. Module selon l'une quelconque des revendications précédentes, dans lequel l'organe de liaison (60) est destiné à être en contact avec :
- le couvercle d'au moins l'un des ensembles de stockage (20) et/ou
- l'élément tubulaire (21) d'au moins l'un des ensembles de stockage (20) pour connecter électriquement l'organe de liaison et les ensembles de stockage.

5. Module selon l'une quelconque des revendications précédentes, dans lequel l'organe de liaison comprend au moins une face de contact (63, 64, 66, 67, 71, 86) destinée à venir en contact avec le couvercle ou avec l'élément tubulaire d'au moins l'un des ensembles de stockage, la face de contact présentant une forme complémentaire de la forme du couvercle ou de l'élément tubulaire.

6. Module selon la revendication précédente, dans lequel la face de contact (63, 64, 66, 67, 71, 86) est concave.

7. Module selon l'une quelconque des revendications 5 ou 6, dans lequel l'organe de liaison comprend un berceau destiné à être fixé, par exemple par emboîtement, sur un support d'un des ensembles de stockage, le berceau et le support ayant des formes complémentaires.

8. Module selon la revendication précédente, dans lequel le berceau comporte un tenon ou une mortaise, et le support comporte une mortaise ou un tenon.

9. Module selon l'une quelconque des revendications précédentes, dans lequel l'organe de liaison est distinct des deux ensembles de stockage, l'organe de liaison comportant deux faces de contact, chaque face de contact présentant de préférence un profil complémentaire du profil du couvercle et/ou de l'élément tubulaire avec lequel ladite face est destinée à venir en contact.

10. Module selon l'une quelconque des revendications 1 à 8, dans lequel l'organe de liaison comprend une patte (70, 86) monobloc avec un des ensembles, notamment un des couvercles.

11. Module selon l'une quelconque des revendications 1 à 8, dans lequel l'organe de liaison comprend deux pattes (64, 65) formant chacune une portion de l'organe de liaison, chaque patte étant monobloc avec un ensemble, notamment couvercle, respectif, lesdites pattes étant positionnées sur les ensembles de sorte à se superposer lors de la connexion électrique desdits ensembles.

12. Module selon la revendication précédente, dans lequel l'une (65) des pattes formant l'organe de liaison est plus épaisse que l'autre (64) des pattes formant l'organe de liaison.

13. Module selon l'une quelconque des revendications 10 à 12, dans lequel une patte (86) de l'organe de liaison est monobloc avec un couvercle destiné à être enfoncé dans l'élément tubulaire d'un ensemble de stockage, ledit élément tubulaire présentant une découpe (92) de forme complémentaire de celle de la section de la patte.

14. Module selon l'une quelconque des revendications 10 à 12, dans lequel une patte (70) de l'organe de liaison est monobloc avec un couvercle, ladite patte étant agencée sur une jupe périphérique s'étendant à la périphérie de la paroi couvrante du couvercle (53, 54) et étant destinée à entourer la face latérale de l'élément tubulaire.

15. Module selon l'une quelconque des revendications précédentes, dans lequel chaque portion de l'organe de liaison est reliée à l'ensemble ou les ensembles dont elle est distincte par soudage, de préférence soudage par friction malaxage.

16. Procédé d'assemblage d'un module comportant au moins deux ensembles de stockage d'énergie électrique (20), ledit module étant selon l'une quelconque des revendications 1 à 15, chaque ensemble de stockage comprenant :
- un élément tubulaire (21, 90) comportant une face dite latérale (23, 94),
- au moins un couvercle (50, 80) destiné à coiffer l'une des extrémités de l'élément tubulaire, le couvercle (50, 80) comprenant une paroi couvrante (51, 52, 82) destinée à recouvrir ladite extrémité de l'élément tubulaire,
**caractérisé en ce que** le procédé comprend une étape (300) de positionnement de la ou des portions d'un organe de liaison, ledit organe comprenant au moins une portion, chaque portion étant distincte d'au moins un ensemble, de façon à relier les deux ensembles de stockage pour les connecter électriquement, l'organe de liaison n'étant pas disposé sur ledit au moins un couvercle mais étant positionné entre les deux ensembles de stockage de sorte que la hauteur de l'ensemble de stockage connecté à l'organe de liaison est égale à la hauteur d'un ensemble de stockage dépourvu d'organe de liaison.

17. Procédé selon la revendication précédente, lequel comprend en outre une étape de fixation de chaque portion de l'organe de liaison de façon à la relier au ou aux ensembles de stockage dont elle est distincte.

18. Procédé selon la revendication précédente, dans lequel l'étape de fixation est une étape de soudage, notamment de soudage par friction malaxage.

## Patentansprüche

1. Modul, das zumindest zwei elektrischer Energiespeicherzellen (20) umfasst, wobei jede Speicherzelle umfasst:
- ein rohrförmiges Element, (21,90), das eine sogenannte Seitenfläche (23, 94) umfasst,
- zumindest einen Deckel (50, 80), der eines der Enden des rohrförmigen Elements abdecken soll, wobei der Deckel eine abdeckende Wand (51, 52, 82) umfasst, die das Ende des rohrförmigen Elements abdecken soll,
**dadurch gekennzeichnet, dass** das Modul außerdem einen Verbindungskörper (60, 84) umfasst, der die beiden Zellen elektrisch verbinden soll, wobei der Verbindungskörper einen oder mehrere Abschnitte (64, 65) umfasst, wobei jeder Abschnitt von zumindest einem der Speicherzellen (20) getrennt ist, wobei der Verbindungskörper nicht auf dem zumindest einen Deckel angeordnet ist, sondern sich zwischen den beiden Speicherzellen erstreckt, so dass die Höhe jeder an den Verbindungskörper angeschlossenen Speicherzelle gleich der Höhe einer Speicherzelle ohne Verbindungskörper ist.

2. Modul nach vorstehendem Anspruch, wobei sich der Verbindungskörper zwischen den beiden Speicherzellen erstreckt, so dass die Höhe der beiden zusammengebauten Zellen gleich der Höhe der Zelle mit der größten Höhe ist.

3. Modul nach irgendeinem der vorstehenden Ansprüche, bei dem man als Hauptrichtung die Richtung definiert, die die Achsen der beiden rohrförmigen Elemente verbindet, wenn die Zellen montiert sind, wobei sich der Verbindungskörper zwischen den Speicherzellen erstreckt, so dass die Abmessung nach einer sekundären Richtung senkrecht sowohl zur Richtung der Achsen der rohrförmigen Elemente als auch der Hauptrichtung der Montage der beiden Speicherzellen geht, die mit dem Verbindungskörper versehen sind, gleich der Dimension nach dieser Richtung der Speicherzelle, die die größte Abmessung haben.

4. Modul nach irgendeinem der vorstehenden Ansprüche, wobei der Verbindungskörper (60) in Berührung sein soll mit:
- dem Deckel mindestens einer der Speicherzellen (20) und/oder
- dem rohrförmigen Element (21) zumindest einer der Speicherzellen (20) für den elektrischen Anschluss des Verbindungskörpers und der Speicherzellen.

5. Modul nach irgendeinem der vorstehenden Ansprüche, wobei der Verbindungskörper zumindest eine Anlagefläche (63, 64, 66, 67, 71, 86) umfasst, die in Berührung mit dem Deckel oder mit dem rohrförmigen Element zumindest einer der Speicherzellen kommen soll, wobei die Anlagefläche eine komplementäre Form zur Form des Deckels oder des rohrförmigen Elements aufweist.

6. Modul nach dem vorstehenden Anspruch, wobei die Anlagefläche (63, 64, 66, 67, 71,86) konkav ist.

7. Modul nach irgendeinem der vorstehenden Ansprüche 5 oder 6, wobei der Verbindungskörper eine Wiege umfasst, die zum Beispiel durch Einstecken auf einer Halterung der Speicherzellen befestigt werden soll, wobei die Wiege und die Halterung komplementäre Formen haben.

8. Modul nach dem vorstehenden Anspruch, in dem die Wiege einen Bolzen oder eine Nut umfasst und die Halterung eine Nut oder einen Bolzen umfasst.

9. Modul nach irgendeinem der vorstehenden Ansprüche, wobei der Verbindungskörper getrennt von den beiden Speicherzellen ist, der Verbindungskörper zwei Anlageflächen umfasst, wobei jede Anlagefläche bevorzugt ein komplementäres Profil zum Profil des Deckels und/oder des rohrförmigen Elements aufweist, mit dem die besagte Fläche in Berührung kommen soll.

10. Modul nach irgendeinem der vorstehenden Ansprüche 1 bis 8, wobei der Verbindungskörper eine einstückige Lasche (70, 86) mit einer der Zellen und insbesondere einem der Deckel umfasst.

11. Modul nach irgendeinem der vorstehenden Ansprüche 1 bis 8, wobei der Verbindungskörper zwei Laschen (64, 65) umfasst, die jeweils einen Abschnitt des Verbindungskörpers bilden, wobei jede Lasche einstückig mit einer Zelle, insbesondere dem jeweiligen Deckel ist, wobei die Laschen so auf den Zellen positioniert sind, dass sie sich bei der elektrischen Verbindung der Zellen übereinanderschieben.

12. Modul nach dem vorstehenden Anspruch, wobei eine (65) der Laschen, die den Verbindungskörper bilden, dicker als die andere (64) der Laschen ist, die den Verbindungskörper bilden.

13. Modul nach irgendeinem der vorstehenden Ansprüche 10 bis 12, wobei eine Lasche (86) des Verbindungskörpers einstückig mit einem Deckel ist, der in das rohrförmige Element einer Speicherzellen eingedrückt werden soll, wobei das rohrförmige Element einen Ausschnitt (92) komplementärer Form zu derjenigen des Querschnitts der Lasche hat.

14. Modul nach irgendeinem der vorstehenden Ansprüche 10 bis 12, wobei eine Lasche (70) des Verbindungskörpers einstückig mit einem Deckel ist, wobei die Lasche auf einer Ringverkleidung gestaltet ist, die sich an der Peripherie der abdeckenden Wand des Deckels (53, 54) erstreckt und die Seitenfläche des rohrförmigen Elements umgeben soll.

15. Modul nach irgendeinem der vorstehenden Ansprüche, wobei jeder Abschnitt des Verbindungskörpers mit der Zelle oder den Zellen verbunden ist, von denen sie durch Schweißung getrennt ist, bevorzugt Reibrührschweißverfahren.

16. Verfahren zur Montage eines Moduls, das zumindest zwei elektrischer Energiespeicherzellen (20) nach irgendeinem der vorstehenden Ansprüche 1 bis 15 umfasst, wobei jede Speichereinheit Folgendes umfasst:
- ein rohrförmiges Element, (21,90), das eine sogenannte Seitenfläche (23, 94) umfasst,
- zumindest einen Deckel (50, 80), der eines der Enden des rohrförmigen Elements abdecken soll, wobei der Deckel (50, 80) eine abdeckende Wand (51, 52, 82) umfasst, die das Ende des rohrförmigen Elements abdecken soll,
**dadurch gekennzeichnet, dass** das Verfahren einen Schritt (300) mit Positionierung des oder der Abschnitte eines Verbindungskörpers umfasst, wobei der Körper zumindest einen Abschnitt umfasst, wobei jeder Abschnitt von zumindest einem der Zellen getrennt ist, so dass die beiden Speicherzellen verbunden werden, um sie elektrisch zu verbinden, wobei der Verbindungskörper nicht auf dem zumindest einen Deckel angeordnet ist, sondern zwischen den beiden Speicherzellen angeordnet ist, so dass die Höhe der mit dem Verbindungskörper verbundenen Speicherzelle gleich der Höhe einer Speicherzelle ohne Verbindungskörper ist.

17. Verfahren nach dem vorstehenden Anspruch, das ferner einen Schritt mit Befestigung jedes Abschnitts des Verbindungskörpers umfasst, so dass er mit dem oder den Speichereinheiten verbunden wird, von denen er getrennt ist.

18. Verfahren nach dem vorstehenden Anspruch, wobei der Schritt mit Befestigung ein Schweißschritt ist, insbesondere Reibrührschweißverfahren.

## Claims

1. A module comprising at least two electrical energy storage assemblies (20), each storage assembly comprising:
- a tubular element (21, 90) having a so-called side face (23, 94);
- at least one cover (50, 80) intended to cap one of the ends of the tubular element, the cover comprising a covering wall (51, 52, 82) intended to cover said end of the tubular element,
**characterized in that** the module further comprises a connecting body (60, 84) intended to connect the two assemblies electrically, the connecting body comprising one or more portions (64, 65), each portion being separate from at least one of the storage assemblies (20), the connecting body being not disposed on said at least one cover but extending between the two storage assemblies so that the height of each storage assembly connected to the connecting body is equal to the height of a storage assembly not having a connecting body.

2. The module according to the preceding claim, wherein the connecting body extends between the two storage assemblies so that the height of the two joined assemblies is equal to the height of the assembly having the greatest height.

3. The module according to any of the preceding claims wherein the main direction is defined as being the direction joining the axes of the two tubular elements once the assemblies have been joined, the connecting body extending between the storage assemblies so that in a secondary direction perpendicular both to the direction of the axes of the tubular elements and to the main direction, the dimension of the two joined storage assemblies provided with the connecting body is equal to the dimension in this direction of the storage assembly having the largest dimension.

4. The module according to any of the preceding claims wherein the connecting body (60) is intended to be in contact with:
- the cover of at least one of the storage assemblies (20); and/or
- the tubular element (21) of at least one of the storage assemblies (20) for the electrical connection of the connecting body and the storage assemblies.

5. The module according to any of the preceding claims wherein the connecting body comprises at least one contact face (63, 64, 66, 67, 71, 86) intended to come into contact with the cover or with the tubular element of at least one of the storage assemblies, the contact face having a shape mating with the shape of the cover or of the tubular element.

6. The module according to the preceding claim wherein the contact face (63, 64, 66, 67, 71, 86) is concave.

7. The module according to any of claims 5 or 6 wherein the connecting body comprises a cradle intended to be secured e.g. by interlocking onto a support of one of the storage assemblies, the cradle and the support having matching shapes.

8. The module according to the preceding claim wherein the cradle comprises a tenon or mortise and the support comprises a mortise or tenon.

9. The module according to any of the preceding claims where the connecting body is separate from the two storage assemblies, the connecting body having two contact faces, each contact face preferably having a profile mating with the profile of the cover and/or of the tubular element with which said face is intended to come into contact.

10. The module according to any of claims 1 to 8 wherein the connecting body comprises a tongue (70, 86) in a single piece with one of the assemblies, in particular with one of the covers.

11. The module according to any of claims 1 to 8 wherein the connecting body comprises two tongues (64, 65) each forming a portion of the connecting body, each tongue being in a single piece with a respective assembly, a cover in particular, said tongues being positioned on the assemblies so that they are superimposed when the assemblies are electrically connected.

12. The module according to the preceding claim where one (65) of the tongues forming the connecting body is thicker than the other (64) of the tongues forming the connecting body.

13. The module according to any of claims 10 to 12 wherein one tongue (86) of the connecting body is in a single piece with a cover intended to be pressed into the tubular element of a storage assembly, said tubular element having a cut-out (92) whose shape matches the cross-section of the tongue.

14. The module according to any of claims 10 to 12 wherein one tongue (70) of the connecting boy is in a single piece with a cover, said tongue being arranged on a peripheral skirt extending on the periphery of the covering wall of the cover (53, 54) and being intended to surround the side face of the tubular element.

15. The module according to any of the preceding claims wherein each portion of the connecting body is connected by welding to the assembly or the assemblies from which it is separate, welding preferably being Friction Stir Welding.

16. A method for assembling a module comprising at least two electrical energy storage assemblies, said module being according to any one of claims 1 to 15, each storage assembly comprising:
- a tubular element (21, 90) having a so-called side face (23, 94);
- at least one cover (50, 80) intended to cap one of the ends of the tubular element, the cover (50, 80) comprising a covering wall (51, 52, 82) intended to cover said end of the tubular element,
**characterized in that** the method comprises a step (300) to position the portion or portions of a connecting body, said body comprising at least one portion, each portion being separate from at least one assembly, so as to join the two storage assemblies for the electrical connection thereof, the connecting body being positioned between the two storage assemblies so that the height of the storage assembly connected to the connecting body is equal to the height of a storage assembly not having a connecting body.

17. The method according to the preceding claim which further comprises a securing step of each portion of the connecting body so as to connect it to the storage assembly or assemblies from which it is separate.

18. The method according to the preceding claim wherein the securing step is a welding step, in particular Friction Stir Welding.
